# EUROPEAN PATENT SPECIFICATION

(11) **EP 3 438 036 B1**
(45) Date of publication and mention of the grant of the patent: **01.12.2021**
(21) Application number: 18168623.9
(22) Date of filing: 20.04.2018
(51) Int. Cl.: B66B 7/06, B66B 23/24, D07B 1/16

(54) **FIRE-RESISTANT SYNTHETIC TENSION MEMBERS**
SYNTHETISCHE FEUERFESTE ZUGGLIEDER
ÉLÉMENTS DE TENSION SYNTHÉTIQUES RÉSISTANTS AU FEU

(30) Priority: 20.04.2017 US 201762487673 P
(43) Date of publication of application: 06.02.2019
(60) Divisional application: 21204064.6
(73) Proprietor: Otis Elevator Company, Farmington, Connecticut 06032 (US)
(72) Inventor: ZHAO, Chen Qian, Farmington, CT Connecticut 06032 (US)
(74) Representative: Dehns

(56) References cited:
- EP-A2- 2 749 521
- WO-A1-2010/019151
- US-A- 6 090 319
- US-A1- 2011 259 677
- US-A1- 2011 263 773

## Description

### BACKGROUND

There are various uses for elongated flexible assemblies such as for elevator load bearing members or roping arrangements, drive belts for machines such as a passenger conveyor and handrails for passenger conveyors, for example. Such elongated flexible assemblies may comprise one or more tension members encased in a jacket material. Such assemblies may be designed with fire resistance performance in order to meet existing building codes. Such assemblies must also meet mechanical performance requirements, such as tensile strength and stiffness requirements.

US 2011/259677 discloses a load-bearing assembly according to the preamble of claim 1 and a method of making a load-bearing assembly according to the preamble of claim 10. Said document discloses in particular a suspension and transmission device for use with an elevator system which includes one or more strips that provide load carrying, transmission or traction, and load carrying redundancy or safety functions for the elevator system. US 6090319 discloses a process for the continuous preparation of a coated, long fiber reinforcing composite structure suitable for the preparation of shaped articles. EP 2749521 discloses a method for rope condition monitoring of an elevator. WO 2010/019151 discloses a cord and polymer jacket assembly having a flame retardant in the polymer jacket material.

### SUMMARY

A load-bearing assembly according to an example of the present invention includes at least one tension member. The tension member has a resin, reinforcement fibers, and at least one additive that provides a fire-resistance to the tension member. A jacket material covers the at least one tension member. The at least one additive comprises a first additive that provides fire-resistant properties and a second additive that provides another property that is at least one of smoke-suppressant and char-forming properties, and the second additive comprises at least one of metal-exchanged clays, zeolites, and magnesium silicate complex.

In a further embodiment of the foregoing embodiment, the load-bearing assembly is configured to support the weight of an elevator car.

In a further embodiment of any of the foregoing embodiments, the load-bearing assembly is a handrail for a passenger conveyor.

In a further embodiment of any of the foregoing embodiments, the resin comprises at least one of epoxy, polyurethane, vinyl ester, ethylene propylene diene monomer (EPDM), and melamine.

In a further embodiment of any of the foregoing embodiments, the reinforcement fibers comprise at least one of liquid crystal polymer, carbon fiber, glass fiber, ultra high molecular weight polyethylene fiber, ultra high molecular weight polypropylene fiber, fiber, polybenzoxazole fiber, aramid fiber and nylon.

In a further embodiment of any of the foregoing embodiments, the first additive comprises at least one of a phosphorous-containing compound or polymer and a nitrogen-containing compound or polymer.

In a further embodiment of any of the foregoing embodiments, the tension member further comprises at least one nanofiller.

In a further embodiment of any of the foregoing embodiments, the at least one nanofiller comprises at least one of the following functional groups: glycidyl, silane, hydroxyl, carboxyl, amine, isocyanate, ethylene, and amide.

In a further embodiment of any of the foregoing embodiments, the at least one nanofiller includes at least one of magnesium hydroxide and aluminum trihydrate.

A method of making a load-bearing assembly according to an example of the present invention includes providing reinforcement fibers to a die, providing a resin precursor to the die, curing the resin precursor and fibers to form at least one synthetic tension member comprising a resin having a fire-resistance, and covering the at least one synthetic tension member in a jacket material. The resin precursor comprises at least one additive that provides a fire-resistance to the tension member, the at least one additive comprises a first additive that provides fire-resistant properties and a second additive that provides another property that is at least one of smoke-suppressant and char-forming properties, and the second additive comprises at least one of metal-exchanged clays, zeolites, magnesium silicate complex.

In a further embodiment of the foregoing method, the first additive comprises at least one of a phosphorous-containing compound or polymer and a nitrogen-containing compound or polymer.

The various features and advantages of this invention will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an elevator system including a load bearing member designed according to an embodiment of this invention.
Figure 2 is an end view schematically showing one example elevator load bearing member assembly.
Figure 3 is an end view schematically illustrating another example elevator load bearing assembly.
Figure 4 diagrammatically illustrates a passenger conveyor including a drive belt and a handrail designed according to an embodiment of this invention.
Figure 5 schematically shows an example drive belt configuration.
Figure 6 schematically shows an example handrail configuration.
Figure 7 schematically shows a detail view of an example synthetic tension member.
Figure 8 schematically shows a system for making a synthetic tension member.
Figure 9 schematically shows a detail view of another synthetic tension member which does not form part of the invention.

### DETAILED DESCRIPTION

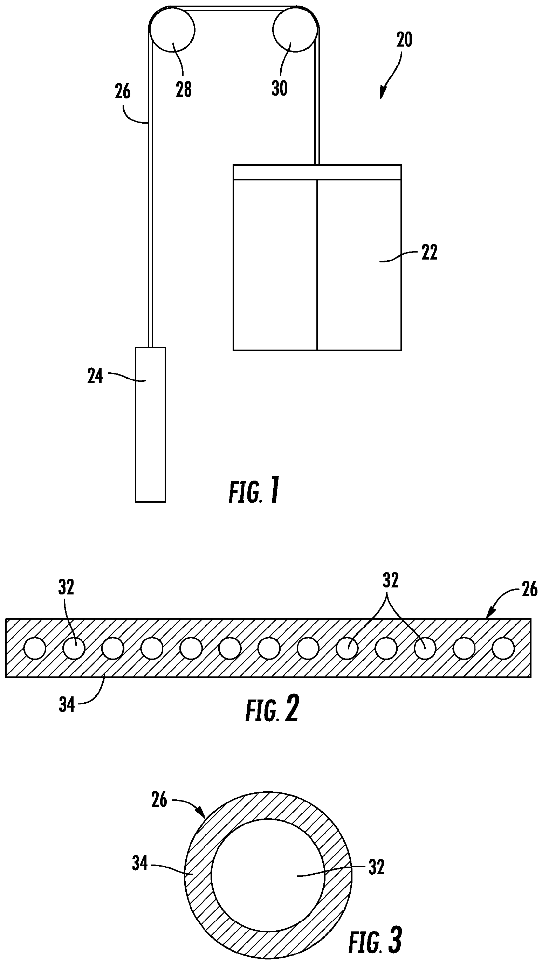

Figure 1 schematically shows selected portions of an example elevator system 20. An elevator car 22 and counterweight 24 are suspended by a load bearing assembly 26. In one example, the load bearing assembly 26 comprises a plurality of flat belts. In another example, the load bearing assembly 26 comprises a plurality of round ropes.

The load bearing assembly 26 supports the weight of the elevator car 22 and the counterweight 24 and facilitates movement of the elevator car 22 into desired positions by moving along sheaves 28 and 30. One of the sheaves will be a traction sheave that is moved by an elevator machine in a known manner to cause the desired movement and placement of the elevator car 22. The other sheave in this example is an idler sheave.

Figure 2 is an end view schematically showing one example flat belt configuration included as part of the example load bearing assembly 26. In this example, the flat belt includes a plurality of elongated cord tension members 32 and a polymer jacket 34 that contacts the tension members 32. In this example, the jacket 34 encases the tension members 32. The polymer jacket 34 in one example comprises a thermoplastic elastomer. In one example, the jacket 34 comprises a thermoplastic polyurethane.

An example rope used as part of the load bearing assembly 26 is schematically shown in Figure 3 and includes at least one tension member 32 and a polymer jacket 34. In the example of Figure 3, the same materials can be used as those mentioned above.

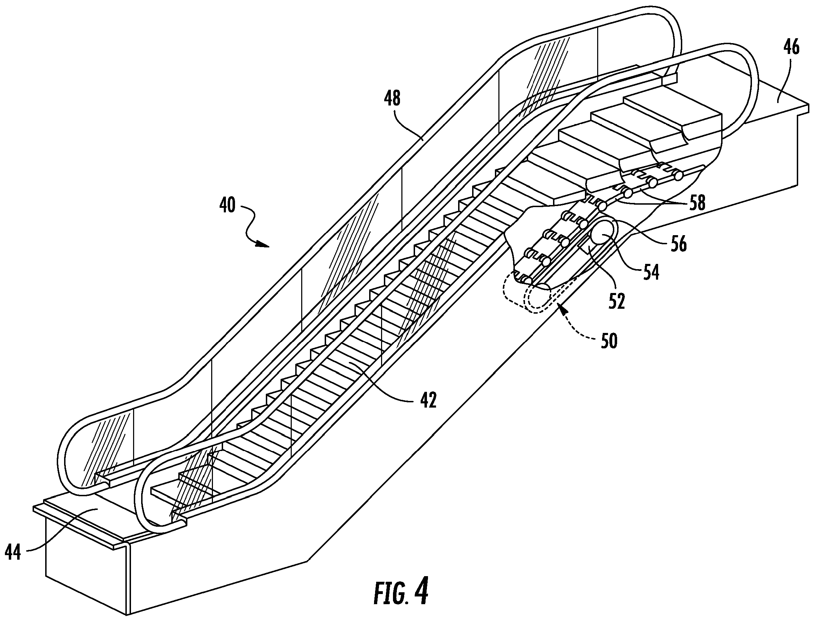

Figure 4 schematically illustrates an example passenger conveyor 40. In this example, a plurality of steps 42 move in a known manner to carry passengers between landings 44 and 46. A handrail 48 is provided for passengers to grab onto while traveling on the conveyor 40.

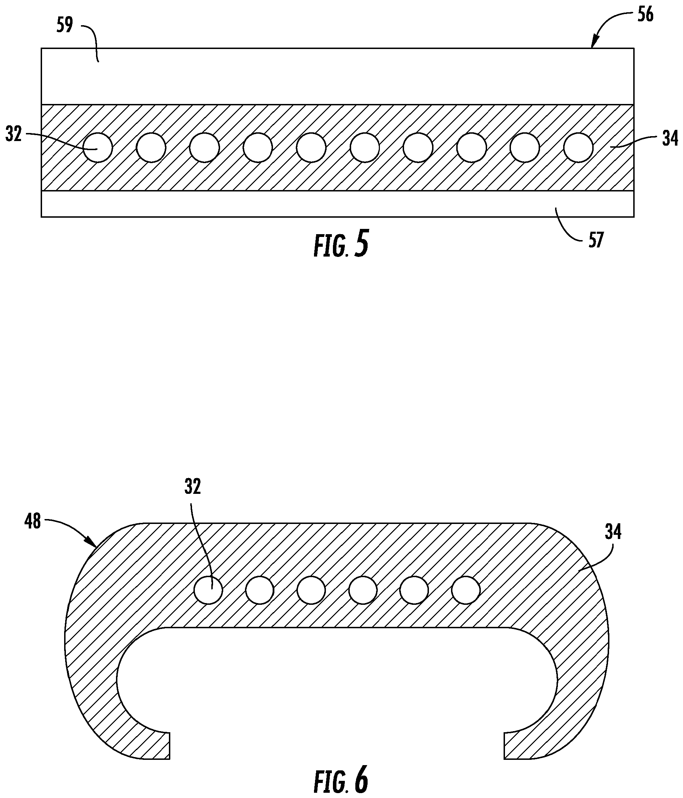

As shown in Figure 6, the handrail 48 includes a plurality of tension members 32 at least partially covered by a polymer jacket 34. The polymer jacket in this example establishes the gripping surface and the body of the handrail 48.

The example of Figure 4 also includes a drive arrangement 50 for propelling the steps 42 in a desired direction. A motor 52 rotates a drive sheave 54 to cause movement of a drive belt 56. As shown in Figure 5, the example drive belt 56 has a plurality of elongated cord tension members 32 covered by a jacket 34. The jacket material establishes teeth 57 that interact with a corresponding surface on the drive sheave 54. A step chain 58 (Figure 4) is engaged by teeth 59 on the drive belt 56 to cause the desired movement of the steps 42. In this example, the teeth 57 and 59 are on oppositely facing sides of the drive belt 56.

The tension members 32 comprise synthetic material, or more particularly, a fiber-reinforced polymer resin. Synthetic tension members 32 are lighter than metal-based tension members, which can be advantageous in some situations. Synthetic materials do not typically have an inherent fire-resistant quality or characteristic.

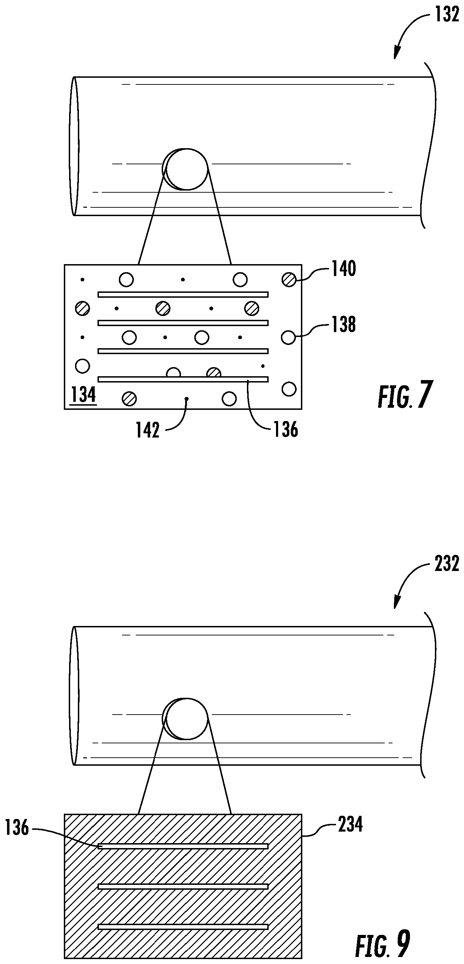

Figure 7 schematically illustrates selected features of a first example synthetic tension member 132. The synthetic tension member 132 includes a resin 134. Example resins 134 include epoxy, polyurethane, vinyl ester, ethylene propylene diene monomer (EPDM), and melamine.

Tension member 132 includes fibers 136 that enhance the mechanical properties of the synthetic tension member 132. The fibers 136 are encased in the resin 134 in this example. Though the fibers 136 in Figure 7 are shown arranged parallel to one another, any fiber arrangement can be used, including random fiber arrangement. Example fibers 136 include liquid crystal polymer, carbon fiber, glass fiber, ultra high molecular weight polyethylene and/or polypropylene fiber, polybenzoxazole fiber, aramid fiber and nylon.

The resin 134 also includes one or more additives. In a particular example, the synthetic tension member 132 includes a first additive 138 that provides fire-resistant properties and a second additive 140 that provides smoke-suppressant/char-forming properties. Example fire-resistant first additives 138 include phosphorous-containing or nitrogen-containing compounds or polymers. The smoke-suppressant and/or char-forming second additives 140 are at least one of metal-exchanged clays, zeolites, and zinc molybdenate, magnesium silicate complex.

In the illustrated example, the synthetic tension member 132 includes an optional nanofiller 142. The optional nanofiller 142 allows for improved mechanical properties and customization of the synthetic tension member 132. Example nanofillers 142 include materials with one or more of the following functional groups: glycidyl, silane, hydroxyl, carboxyl, amine, isocyanate, ethylene, and amide. More particularly, example nanofillers include magnesium hydroxide and aluminum trihydrate. In some examples, the nanofiller 142 is chemically treated.

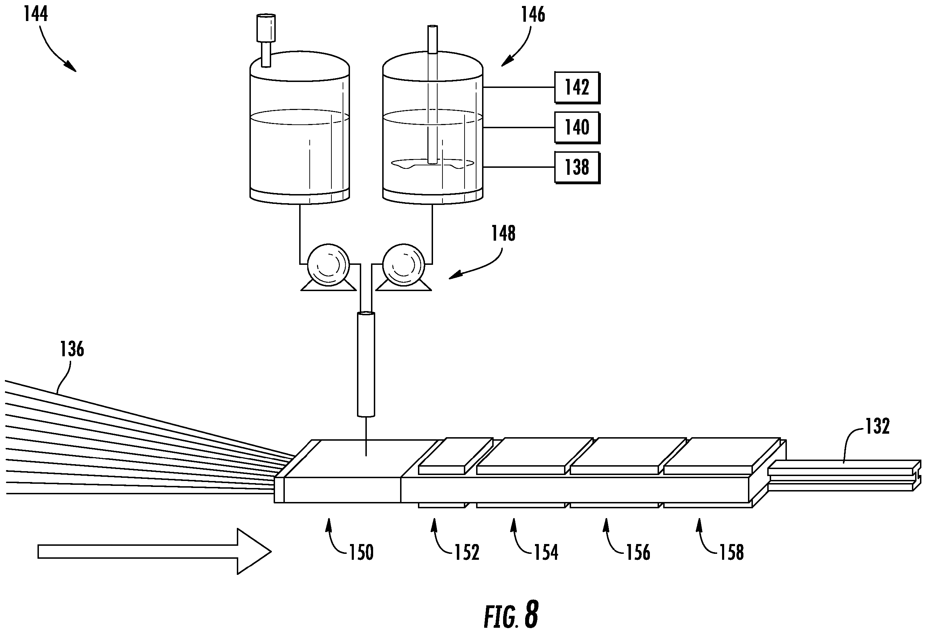

Figure 8 shows a system 144 for making the example tension member 132. The system 144 includes at least one resin-precursor tank 146 and at least one metering pump 148. This example includes two tanks 146 and a dedicated metering pump 148 for each of the at least one resin-precursor tanks 146. Additives 138, 140 and option nanofiller 142 are added to the at least one resin-precursor tank 146. In one example, multiple resin-precursor tanks 146 contain different types of resin precursors (for instance, selected precursors to the example resin 134 discussed above), which are blended together. The at least one resin-precursor tank 146 provides resin precursor with additives to an injection box 150. The injection box 150 also receives fibers 136.

The injection box 150 provides the resin 134 and fibers 136 to a die 152. In one example, the die 152 is at a different temperature than the injection box 150. More particularly, the die 152 is cooled. The die 152 forms the resin 134 and fibers 136 into the shape of a tension member 132. The shaped tension member 132 travels through one or more zones 154, 156, and 158 which are at various temperatures selected to cure the resin 134.

Figure 9 schematically illustrates features of a second synthetic tension member 232 which does not form part of the presently-claimed invention. The synthetic tension member 232 comprises a self-fire-resistant resin 234 and reinforcement fibers 136. The self-fire-resistant resin 234 comprises a resin precursor that is chemically cured with a fire-resistant curing agent. The curing causes fire-resistant functional groups to be incorporated into the resin precursor, forming self-fire-resistant resin 234. In one example, the curing introduces fire-resistant functional groups into cross-links of the self-fire-resistant resin 234.

An example self-fire-resistant resin 234 is a rigid thermoset carbon-epoxy composite. Example epoxy resin precursors include diglycidylmethylphosphonate, diglycidylphenylphosphonate, triglycidylphosphite, and triglycidylphosphate. Example curing agents include aliphatic polyether triamine (such as JEFFAMINE^{®} T-403, available from Huntsman Corporation), bis(4-aminophenyl)phenylphosphine oxide, bis(3-aminophenyl)methylphosphine oxide and bis(4-aminophenyl)methylphosphonate.

The tension member 232 comprising the self-fire-resistant resin 234 is, in one example, formed by a system similar to the system 144 of Figure 8, except that no additives are added to the resin precursor because the resin precursor already has fire-resistant properties.

Though the fibers 136 in Figure 8 are shown arranged parallel to one another, any fiber arrangement can be used, including random fiber arrangement. Example fibers 136 include liquid crystal polymer, carbon fiber, glass fiber, ultra high molecular weight polyethylene and/or polypropylene fiber, polybenzoxazole fiber, aramid fiber and nylon.

The preceding description is exemplary rather than limiting in nature.

The scope of legal protection given to this invention can only be determined by studying the following claims.

## Claims

1. A load-bearing assembly (26), comprising:
at least one tension member (32, 132), the at least one tension member (32, 132) comprising a resin (134), reinforcement fibers (136), and at least one additive that provides a fire-resistance to the tension member (32, 132); and
a jacket material (34) covering the at least one tension member (32, 132),
**characterised in that** the at least one additive comprises a first additive (138) that provides fire-resistant properties and a second additive (140) that provides another property that is at least one of smoke-suppressant and char-forming properties, and the second additive (140) comprises at least one of metal-exchanged clays, zeolites, and magnesium silicate complex.

2. The load-bearing assembly (26) of claim 1, wherein the reinforcement fibers (136) comprise at least one of liquid crystal polymer, carbon fiber, glass fiber, ultra high molecular weight polyethylene fiber, ultra high molecular weight polypropylene fiber, polybenzoxazole fiber, aramid fiber and nylon.

3. The load-bearing assembly (26) of claim 1 or claim 2, wherein the first additive (138) comprises at least one of a phosphorous-containing compound or polymer and a nitrogen-containing compound or polymer.

4. The load-bearing assembly (26) of any preceding claim, wherein the tension member (32, 132) further comprises at least one nanofiller (142).

5. The load-bearing assembly (26) of claim 4, wherein the at least one nanofiller (142) comprises at least one of the following functional groups: glycidyl, silane, hydroxyl, carboxyl, amine, isocyanate, ethylene, and amide.

6. The load-bearing assembly (26) of claim 5, wherein the at least one nanofiller (142) includes at least one of magnesium hydroxide and aluminum trihydrate.

7. The load-bearing assembly (26) of any preceding claim, wherein the resin (134) comprises at least one of epoxy, polyurethane, vinyl ester, ethylene propylene diene monomer (EPDM), and melamine.

8. The load-bearing assembly (26) of any preceding claim, wherein the load-bearing assembly is configured to support the weight of an elevator car.

9. The load-bearing assembly (26) of any preceding claim, wherein the load-bearing assembly is a handrail for a passenger conveyor.

10. A method of making a load-bearing assembly (26), the method comprising:
providing reinforcement fibers (136) to a die (152);
providing a resin precursor to the die (152);
curing the resin precursor and fibers (136) to form at least one synthetic tension member (32, 132) comprising a resin (134) having a fire-resistance; and
covering the at least one synthetic tension member (32, 132) in a jacket material (34),
**characterised in that** the method comprises providing at least one additive to the resin precursor and the at least one additive comprises a first additive (138) that provides fire-resistant properties and a second additive (140) that provides another property that is at least one of smoke-suppressant and char-forming properties, and the second additive (140) comprises at least one of metal-exchanged clays, zeolites, and magnesium silicate complex.

11. The method of claim 10, wherein the first additive (138) comprises at least one of a phosphorous-containing compound or polymer and a nitrogen-containing compound or polymer.

12. The method of claims 10 or claim 11, wherein the tension member (32, 132) further comprises at least one nanofiller (142).

13. The method of claim 12, wherein the at least one nanofiller (142) comprises at least one of the following functional groups: glycidyl, silane, hydroxyl, carboxyl, amine, isocyanate, ethylene, and amide.

14. The method of claim 13, wherein the at least one nanofiller (142) includes at least one of magnesium hydroxide and aluminum trihydrate.

## Patentansprüche

1. Lasttragende Baugruppe (26), umfassend:
mindestens ein Zugelement (32, 132), wobei das mindestens eine Zugelement (32, 132) ein Harz (134), Verstärkungsfasern (136) und mindestens einen Zusatzstoff umfasst, welcher dem Zugelement (32, 132) eine Feuerbeständigkeit bereitstellt; und
ein Mantelmaterial (34), welches das mindestens eine Zugelement (32, 132) bedeckt,
**dadurch gekennzeichnet, dass** der mindestens eine Zusatzstoff einen ersten Zusatzstoff (138), welcher feuerbeständige Eigenschaften bereitstellt, und einen zweiten Zusatzstoff (140) umfasst, welcher eine andere Eigenschaft bereitstellt, welche mindestens eines von einer rauchmindernden und einer kohlebildenden Eigenschaft ist, und wobei der zweite Zusatzstoff (140) mindestens eines von metallausgetauschten Tonen, Zeolithen und einem Magnesiumsilikatkomplex umfasst.

2. Lasttragende Baugruppe (26) nach Anspruch 1, wobei die Verstärkungsfasern (136) mindestens eines von flüssigkristallinem Polymer, Kohlefaser, Glasfaser, Polyethylenfaser mit ultrahohem Molekulargewicht, Polypropylenfaser mit ultrahohem Molekulargewicht, Polybenzoxazolfaser, Aramidfaser und Nylon umfasst.

3. Lasttragende Baugruppe (26) nach Anspruch 1 oder Anspruch 2, wobei der erste Zusatzstoff (138) mindestens eines von einer phosphorenthaltenden Zusammensetzung oder einem phosphorenthaltenden Polymer und einem stickstoffenthaltenden Zusammensetzung oder einem stickstoffenthaltenden Polymer umfasst.

4. Lasttragende Baugruppe (26) nach einem der vorstehenden Ansprüche, wobei das Zugelement (32, 132) ferner mindestens ein Nanofüllmittel (142) umfasst.

5. Lasttragende Baugruppe (26) nach Anspruch 4, wobei das mindestens eine Nanofüllmittel (142) mindestens eines der folgenden funktionalen Gruppen umfasst: Glycidyl, Silan, Hydroxyl, Carboxyl, Amin, Isocyanat, Ethylen und Amid.

6. Lasttragende Baugruppe (26) nach Anspruch 5, wobei das mindestens eine Nanofüllmittel (142) mindestens eines von Magnesiumhydroxid und Aluminiumtrihydrat umfasst.

7. Lasttragende Baugruppe (26) nach einem der vorstehenden Ansprüche, wobei das Harz (134) mindestens eines von einem Epoxid, Polyurethan, Vinylester, Ethylen-Propylen-Dien-Monomer (EPDM) und Melamin umfasst.

8. Lasttragende Baugruppe (26) nach einem der vorstehenden Ansprüche, wobei die lasttragende Baugruppe dazu konfiguriert ist, das Gewicht einer Aufzugskabine zu stützen.

9. Lasttragende Baugruppe (26) nach einem der vorstehenden Ansprüche, wobei die lasttragende Baugruppe ein Handlauf für einen Fahrsteig ist.

10. Verfahren zum Herstellen einer lasttragenden Baugruppe (26), wobei das Verfahren Folgendes umfasst:
Bereitstellen von Verstärkungsfasern (136) an eine Pressform (152);
Bereitstellen eines Harzpräkursors an die Pressform (152);
Aushärten des Harzpräkursors und der Fasern (136), um mindestens ein synthetisches Zugelement (32, 132) zu bilden, welches ein Harz (134) umfasst, welches eine Feuerbeständigkeit aufweist; und
Bedecken des mindestens einen synthetischen Zugelements (32, 132) mit einem Mantelmaterial (34),
**dadurch gekennzeichnet, dass** das Verfahren ferner ein Bereitstellen mindestens eines Zusatzstoffs an den Harzpräkursor umfasst und wobei der mindestens eine Zusatzstoff einen ersten Zusatzstoff (138), welcher feuerbeständige Eigenschaften bereitstellt, und einen zweiten Zusatzstoff (140) umfasst, welcher eine andere Eigenschaft bereitstellt, welche mindestens eines von einer rauchmindernden und einer kohlebildenden Eigenschaft ist, und wobei der zweite Zusatzstoff (140) mindestens eines von metallausgetauschten Tonen, Zeolithen und einem Magnesiumsilikatkomplex umfasst.

11. Verfahren nach Anspruch 10, wobei der erste Zusatzstoff (138) mindestens eines von einer phosphorenthaltenden Zusammensetzung oder einem phosphorenthaltenden Polymer und einem stickstoffenthaltenden Zusammensetzung oder einem stickstoffenthaltenden Polymer umfasst.

12. Verfahren nach Anspruch 10 oder 11, wobei das Zugelement (32, 132) ferner mindestens ein Nanofüllmittel (142) umfasst.

13. Verfahren nach Anspruch 12, wobei das mindestens eine Nanofüllmittel (142) mindestens eines der folgenden funktionalen Gruppen umfasst: Glycidyl, Silan, Hydroxyl, Carboxyl, Amin, Isocyanat, Ethylen und Amid.

14. Verfahren nach Anspruch 13, wobei das mindestens eine Nanofüllmittel (142) mindestens eines von Magnesiumhydroxid und Aluminiumtrihydrat umfasst.

## Revendications

1. Ensemble porteur (26), comprenant :
au moins un élément de tension (32, 132), l'au moins un élément de tension (32, 132) comprenant une résine (134), des fibres de renforcement (136), et au moins un additif qui fournit une résistance au feu à l'élément de tension (32, 132) ; et
un matériau de gaine (34) recouvrant l'au moins un élément de tension (32, 132),
**caractérisé en ce que** l'au moins un additif comprend un premier additif (138) qui fournit des propriétés résistantes au feu et un second additif (140) qui fournit une autre propriété qui est au moins l'une parmi des propriétés de suppression de fumée et de formation de charbon, et le second additif (140) comprend au moins l'un parmi des argiles à échange métallique, des zéolites et un complexe de silicate de magnésium.

2. Ensemble porteur (26) selon la revendication 1, dans lequel les fibres de renforcement (136) comprennent au moins l'un parmi un polymère à cristaux liquides, une fibre de carbone, une fibre de verre, une fibre de polyéthylène de poids moléculaire très élevé, une fibre de polypropylène de poids moléculaire très élevé, une fibre de polybenzoxazole, une fibre d'aramide et du nylon.

3. Ensemble porteur (26) selon la revendication 1 ou la revendication 2, dans lequel le premier additif (138) comprend au moins l'un parmi un composé ou polymère contenant du phosphore ou un composé ou polymère contenant de l'azote.

4. Ensemble porteur (26) selon une quelconque revendication précédente, dans lequel l'élément de tension (32, 132) comprend en outre au moins une nanocharge (142).

5. Ensemble porteur (26) selon la revendication 4, dans lequel l'au moins une nanocharge (142) comprend au moins l'un parmi les groupes fonctionnels suivants : glycidyle, silane, hydroxyle, carboxyle, amine, isocyanate, éthylène et amide.

6. Ensemble porteur (26) selon la revendication 5, dans lequel l'au moins une nanocharge (142) comporte au moins l'un parmi un hydroxyde de magnésium et un trihydrate d'aluminium.

7. Ensemble porteur (26) selon une quelconque revendication précédente, dans lequel la résine (134) comprend au moins l'un parmi un époxy, un polyuréthane, du vinylester, de l'éthylène-propylène-diène monomère (EPDM) et de la mélamine.

8. Ensemble porteur (26) selon une quelconque revendication précédente, dans lequel l'ensemble porteur est configuré pour soutenir le poids d'une cabine d'ascenseur.

9. Ensemble porteur (26) selon une quelconque revendication précédente, dans lequel l'ensemble porteur est une main courante pour un transporteur de passagers.

10. Procédé de fabrication d'un ensemble porteur (26), le procédé comprenant :
la fourniture de fibres de renforcement (136) à une matrice (152) ;
la fourniture d'un précurseur de résine à la matrice (152) ;
le durcissement du précurseur de résine et des fibres (136) pour former au moins un élément de tension synthétique (32, 132) comprenant une résine (134) ayant une résistance au feu ; et
le revêtement de l'au moins un élément de tension synthétique (32, 132) dans un matériau de gaine (34),
**caractérisé en ce que** le procédé comprend la fourniture d'au moins un additif au précurseur de résine et l'au moins un additif comprend un premier additif (138) qui fournit des propriétés résistantes au feu et un second additif (140) qui fournit une autre propriété qui est au moins l'une parmi des propriétés de suppression de fumée et de formation de charbon, et le second additif (140) comprend au moins l'un parmi des argiles à échange métallique, des zéolites et un complexe de silicate de magnésium.

11. Procédé selon la revendication 10, dans lequel le premier additif (138) comprend au moins l'un parmi un composé ou polymère contenant du phosphore ou un composé ou polymère contenant de l'azote.

12. Procédé selon la revendication 10 ou la revendication 11, dans lequel l'élément de tension (32, 132) comprend en outre au moins une nanocharge (142).

13. Procédé selon la revendication 12, dans lequel l'au moins une nanocharge (142) comprend au moins l'un parmi les groupes fonctionnels suivants : glycidyle, silane, hydroxyle, carboxyle, amine, isocyanate, éthylène et amide.

14. Procédé selon la revendication 13, dans lequel l'au moins une nanocharge (142) comporte au moins l'un parmi un hydroxyde de magnésium et un trihydrate d'aluminium.
